Europäisches Patentamt

European Patent Office

Office européen des brevets

(11) Publication number: 0 202 891
A2

# EUROPEAN PATENT APPLICATION

(21) Application number: 86303759.4

(22) Date of filing: 16.05.86

(51) Int. Cl.4: C02F 1/32

(30) Priority: 24.05.85 GB 8513171

(43) Date of publication of application:
26.11.86 Bulletin 86/48

(84) Designated Contracting States:
DE FR GB NL SE

(71) Applicant: W.M. STILL & SONS LIMITED
Fellows Road Hastings
East Sussex, TN34 3TX(GB)

(72) Inventor: Snowball, Malcolm Robert
8 Regency Gardens
St. Leonards-on-Sea East Sussex(GB)
Inventor: Harding, Anthony Michael
86 Cranston Avenue
Bexhill-on-Sea East Sussex(GB)

(74) Representative: Allen, Oliver John Richard et
al
Lloyd Wise, Tregear & Co. Norman House
105-109 Strand
London, WC2R 0AE(GB)

(54) Water purifier with detector.

(57) An ultra-violet light water purifier comprises a path through which water is conducted and along which ultra-violet light from a U.V. lamp is arranged to be emitted, there being two photo detectors arranged along the path, each viewing the U.V. light in the path through a respective window, and means to compare the detector outputs, the window of one detector being of a material which filters out ultra-violet light at germicidal wavelengths and the other window of a material which passes these wavelengths. The compare means is a differential amplifier the output of which is indicated on a meter and is also fed to a threshold amplifier connected in the control circuit of an electrically operated valve through which said water passes. The circuit may be set up so that when the intensity of U.V. light from the lamp is sufficient for germicidal purposes the valve is held open, but if the efficiency of the lamp falls to below satisfactory performance, or if it fails altogether or there is a power failure, the valve is automatically closed.

*Fig.3.*

32

Y

D2
21
D1
22

16

14

24
26

10

2
12
Y

*Fig.4.*

32

D1

22
26

14

12

16

## "WATER PURIFIER WITH DETECTOR"

The present invention relates to a water purifier having an ultra-violet light purification means.

Ultra-violet light has germicidal properties and it is known to use this to purify water. However there is a problem with using ultra-violet (U.V.) light in that if the U.V. source becomes defective it is not readily so apparent to the user. It is therefore possible for the purifier to be ineffective without any warning.

A water purifier having an ultra-violet light purification means according to the present invention comprises a path through which water is conducted and along which ultra-violet light is arranged to be emitted, there being two photo detectors spaced apart along the path, each arranged to view the U.V. light in the path through a respective window, together with means to compare the detector outputs, the window of one detector being of a material which filters out ultra-violet light at germicidal wavelengths and the other window of a material which passes these wavelengths.

Preferably the detectors have a spectral response in the U.V. range down to 180 nm.

By the provision of two similar detectors and windows with different filtration characteristics to U.V. light, it is possible to compare their detection signals to give a signal indicating the level of U.V. light intensity at the germicidal wavelengths. The signal representative of this level can be visually represented by means of a meter or can trigger a visible or audible alarm when it indicates a level below which U.V. radiation in the device is ineffective for germicidal purposes. Alternatively the level signal can be used to close a water supply valve in the event of the U.V. level dropping to an ineffective level.

Preferably one window is made of quartz and the other of borosilicate glass. Borosilicate is practically opaque to U.V. light of 253.7 nm which is the most effective germicidal wavelength and is approximately central to the germicidal range of 180-300 nm. Both quartz and borosilicate glass allow light at normal visible wavelengths to be transmitted. Quartz will transmit U.V. light at and below 253.7 nm.

An embodiment of the invention will now be described by way of example with reference to the accompanying drawings in which:-

Figure 1 is a part-sectional elevation of a U.V. water purifier with two U.V. detectors;

Figure 2 is a plan view of the U.V. purifier of Fig. 1;

Figure 3 is an enlarged sectional view of the right-hand end portion of the purifier of Figure 1;

Figure 4 is a cross section taken at Y-Y of Fig. 3 showing one of the detectors of which the other is similar with the exception of its window material;

Figure 5 is a circuit diagram of a detector system of the device of Figure 1; and

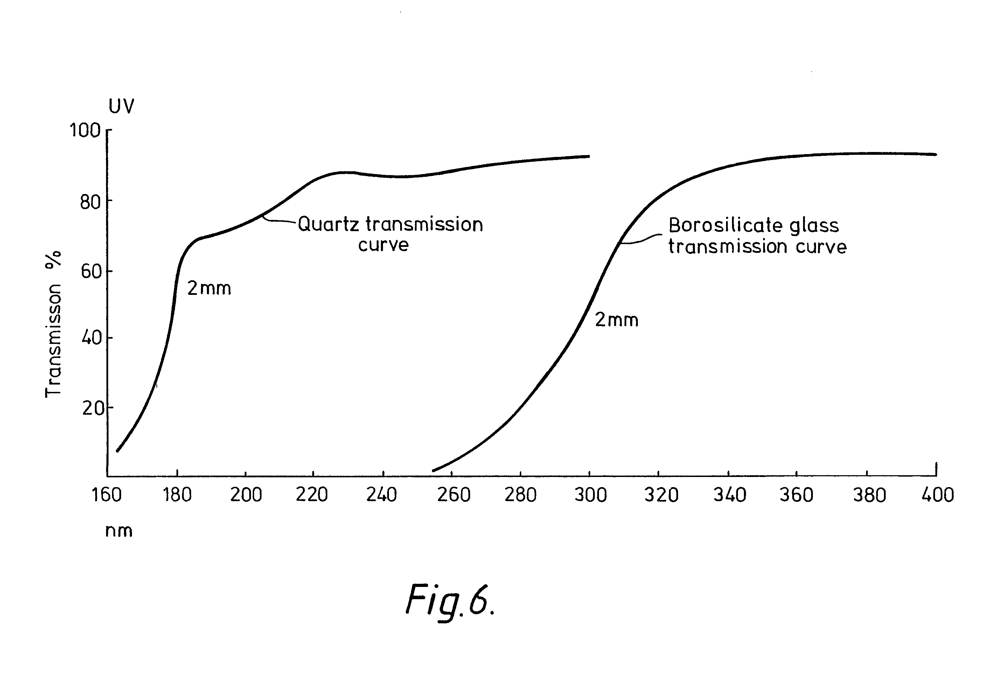

Figure 6 is a comparison of the transmission curves of quartz and borosilicate glass.

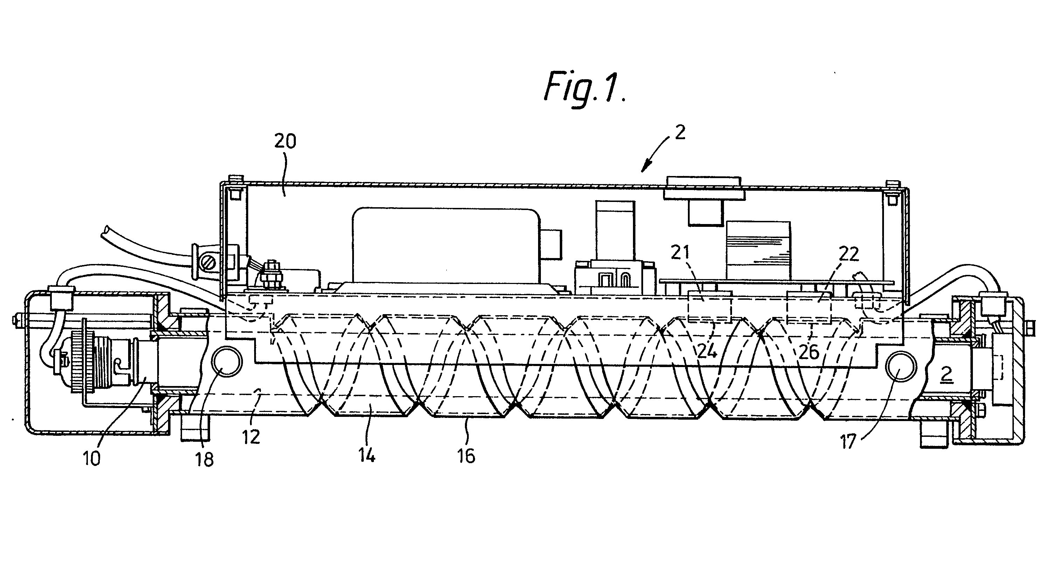

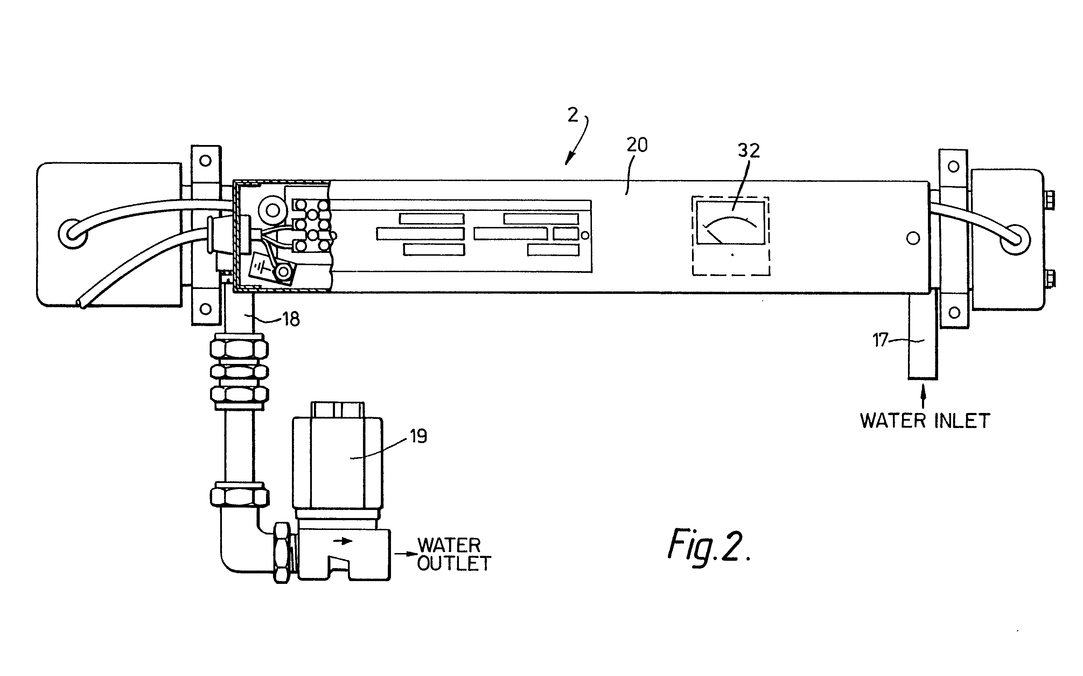

The construction of the water purifier 2 generally shown in Figures 1 and 2 is described in detail in the copending European Patent application ........ having a priority date based on British Patent Application No. 851370, the subject matter of which is incorporated herewith by reference.

The purifier is provided with a U.V. source lamp 10 surrounded by a quartz tube 12 made of commercial grade quartz. Water to be purified passes along an annular duct 14 defined by the tube 12 and an outer tube 16. A water inlet 17 is provided at one end of the tube 16 and a water outlet 18 is provided at the other end of tube 16. An electrically operated solenoid valve 19 is provided at the outlet 18. A control unit 20 to which reference is made hereafter is mounted on the purifier. Further details of the construction of the purifier may be had from the aforesaid pending application.

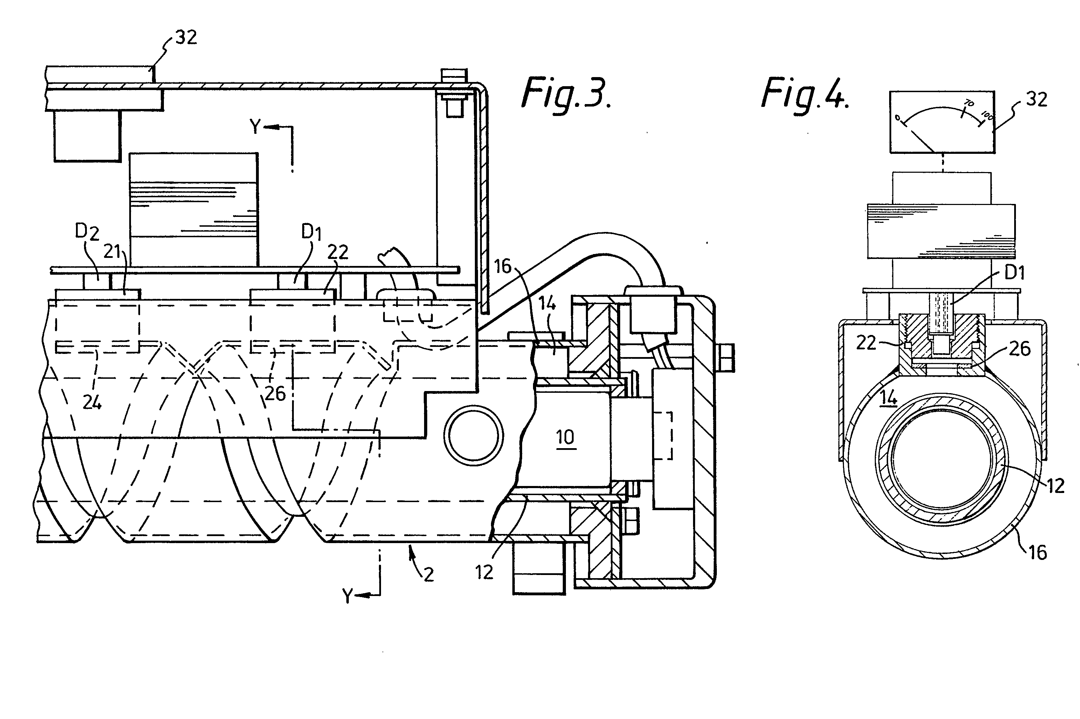

Referring now also to Figures 3 and 4, mounted within the control unit 20 on the tube 16 at centres 50 mm apart (not critical) are two detector housings 21, 22. Housing 21 is fitted with a window 24 made of borosilicate glass and housing 22 is fitted with a window 26 made of high grade non-solarising quartz. Mounted within housing 21 is a photodiode detector D2 and mounted within housing 22 is a matched identical photodiode detector D1. Each photodiode is at the same distance from U.V. source lamp 10.

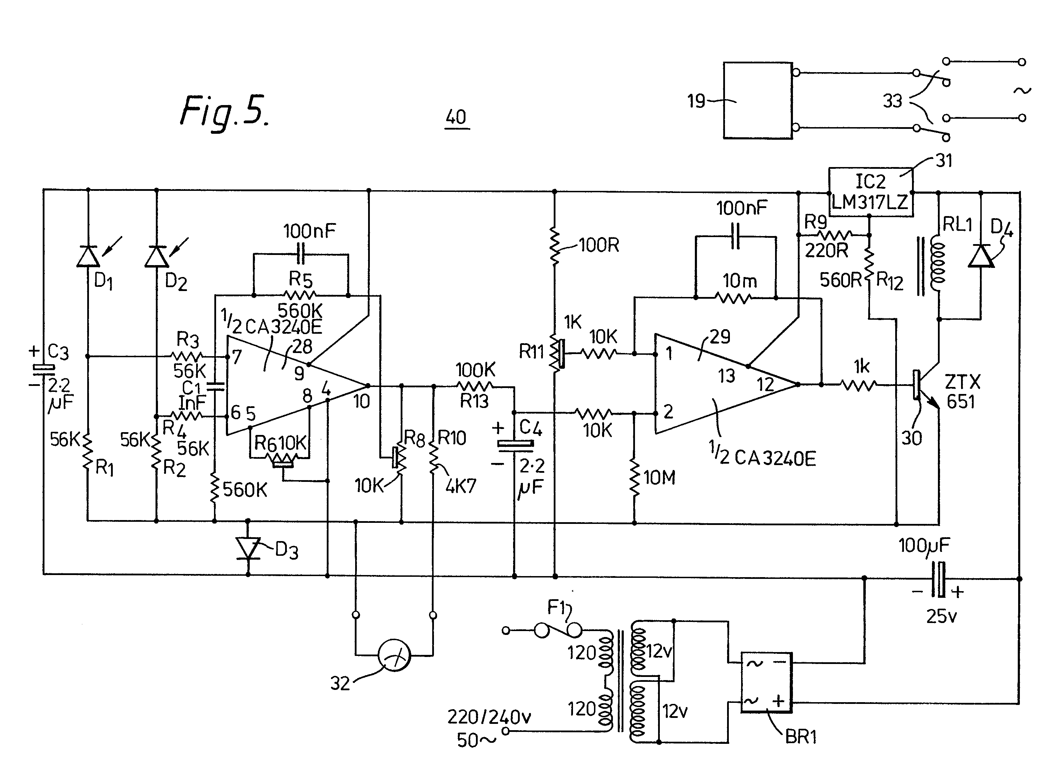

As seen in Figure 5, photodiodes D1 and D2 are reverse biased in the photoconductive mode and are contained in a U.V. monitoring circuit 40 housed within the control unit 20. Photodiodes D1 and D2 are connected to a solid state differential amplifier 28, D1 being connected to one input of amplifier 28 and D2 being connected to the other. The output of amplifier 28 is d.c. coupled to the input of a high gain solid state operational amplifier 29 which in turn operates a current switching transistor 30 in series with the energising coil of a relay RL1. The latter has change-over double pole normally open contacts 33 which connect the energising input of the motorised valve 19 to the a.c. supply.

Differential amplifier 28 and operational amplifier 29 comprise two halves of a solid state integrated circuit type CA 3240F marketed by R.C.A. A voltage regulator 31 is connected to provide a suitable regulated supply to the differential and operational amplifiers. Regulator 31 is a solid state device type LM 3177 marketed by the National Semiconductor Corporation.

Photoelectric signals generated by matching reverse biased photodiodes D1 and D2 develop voltages across resistors R1 and R2 the difference of which is proportional to the intensity of the U.V. illimination. Resistors R1, R2 are also matched in value. Final matching and also zeroing of the output with no U.V. generation is obtained by setting the potentiometer R6.

A suitable signal indicator, in this case an ammeter, 32, mounted on the control unit housing is connected across the output of amplifier 28 in series with a resistor R10 and the negative supply rail via D3. Potentiometer R8, also connected across the amplifier output, controls feedback via resistor R5 and hence the range of measurement. Indicator 32 would normally be calibrated in terms of percentage output.

Potentiometer R11 adjusts the threshold setting of the operational amplifier 29 and so deetermines the value of the U.V. output in terms of its percentage output at which the current to the relay coil RL1 is cut off and hence the value at which the water supply W to the purifier is shut off. An audible and/or visible alarm (not shown) may also be operated.

Relay RL1 is powered on all the time the U.V. source is at a safe level (as determined by the setting of potentiometer R11) to keep the solenoid valve V open and water flowing through the purifier. This provides a fail safe means so that failure of the U.V. source or detector circuit shuts valve V.

SETTING UP PROCEDURE FOR DETECTING SYSTEM

1. Set R6, R8 and R11 to mid points.

2. Place quartz windows in both detector housings and switch on U.V. lamp.

3. Adjust R6 so that meter 32 indicates zero.

4. With illumination on (presumed at proper level) and with a borosilicate window in housing 21 adjust R8 for full scale meter reading.

5. Reduce illumination to threshold level (e.g. 70%) and adjust R11 so that relay RL1 is unpowered.

6. Check steps 3 to 5.

Whilst the meter 32 may be a conventional ammeter, a bar graph display can be substituted.

The detector system described provides a very sensitive and fail safe indication of the germicidal efficiency of the U.V. light intensity falling below a safe level or completely failing. The detector system is cost effective and reliable.

**Claims**

1. An ultra-violet ray water purifier comprising means defining a path taken by water passing through the purifier, said path including a water inlet means and a water outlet means, ultra-violet ray generating means disposed between said inlet means and said outlet means for irradiating the water in said path with ultra-violet light of germicidal wavelengths, first and second windows arranged opposite the ultra-violet ray generating means, said path being between the latter and the said windows, first and second photo-detectors each associated with a respective one of said windows and arranged so as to receive light from the ultra-violet ray generating means which has passed successively through the water and the respective window and compare means connected to said photo-detectors for comparing the light received by said photo-detectors, wherein one of said windows is of a material which filters out ultra-violet light at germicidal wavelengths and the other window is of a material which passes these wavelengths.

2. An ultra-violet ray water purifier according Claim 1 further comprising valve means in at least one of said inlet and outlet means, said valve means having closure means responsive to a signal from said compare means for maintaining the valve in an open condition when the ultra-violet light detected by the photo-detectors is of sufficient intensity to be germicidally effective in the water and for closing said valve when the said intensity is less than effective or when the ultra-violet light is absent.

3. An ultra-violet ray water purifier according to Claim 2 wherein said compare means comprises a differential amplifier having an adjustable threshold amplifier connected to its output, said differential amplifier having a first input containing one of said photo-detectors and a second input containing the second one of said photo-detectors.

4. An ultra-violet ray water purifier according to Claim 3 wherein said photo-detectors are selected initially so as to be substantially identical.

5. An ultra-violet ray water purifier according to Claim 3 further including a relay connected in series with a current switch across an electrical power supply, said relay having normally open contacts in a power-up circuit of said valve closure means, closure of which contacts opens said valve, and said current switch having a signal input connected to the output of said adjustable threshold amplifier.

6. An ultra-violet ray water purifier according to Claim 3 further comprising a signal amplitude indicating means connected at the output of said differential amplifier.

7. An ultra-violet ray water purifier according to Claim 6 wherein said differential amplifier includes zero-offset and gain adjusting means whereby the purifier may be set up so as to provide a zero signal indicated by said indicating means with zero ultra-violet light output and a maximum indicated output by said indicating means when the lamp is operating with its rated ultra-violet light output.

8. An ultra-violet ray water purifier according to Claim 1 wherein at least one of said windows has a releasable mount whereby the window may be exchanged for another.

9. An ultra-violet ray water purifier according to Claim 1 wherein one of said windows is formed of borosilicate glass and the other said window is formed of high-grade non-solarising quartz.

10. An ultra-violet ray water purifier according to Claim 1 wherein said ultra-violet ray generating means comprises a tubular lamp and said path is a cylindrical annular path surrounding said lamp.

11. An ultra-violet ray water purifier according to Claim 1 further comprising turbulator means in said path for causing turbulence in the water passing therethrough.

Fig.1.

2

20

32

18

17 WATER INLET

19

WATER OUTLET

0 202 891

Fig.2.

# Fig.3.

# Fig.4.

D2  
21

D1  
22

16

14

Y

Y

10

2

12

24

26

32

D1

22

26

14

12

16

0 202 891

Fig.5.    40

0 202 891

Fig.6.

0 202 891